# EUROPÄISCHE PATENTANMELDUNG

(11) **EP 0 668 454 A1**
(43) Veröffentlichungstag der Anmeldung: **23.08.1995**
(21) Anmeldenummer: 95100191.6
(22) Anmeldetag: 09.01.1995
(51) Int. Cl.: F16H 57/00, F16H 55/16

(54) **Zahnradgetriebe mit Vorrichtung gegen Klappergeräusche**

(30) Priorität: 22.02.1994 DE 4405532; 28.07.1994 DE 4426678
(71) Anmelder: GETRAG Getriebe- und Zahnradfabrik Hermann Hagenmeyer GmbH & Cie, D-71636 Ludwigsburg (DE)
(72) Erfinder: Knödel, Gunther, D-75417 Mühlacker (DE); Greiner, Manfred, D-71720 Oberstenfeld (DE)
(74) Vertreter: Witte, Alexander, Dr.-Ing.

(57) **Zusammenfassung**

Ein Zahnradgetriebe weist einen Radsatz (10) auf, der mindestens zwei Zahnräder (11, 12) umfaßt. Ferner ist ein elastisches Dämpfungsglied (30) vorgesehen, das zwischen den Zahnrädern (11, 12) wirkt. Das Dämpfungsglied (30) übt beim Kämmen der Zahnräder (11, 12) zum Vermeiden von Getrieberasseln und/oder Leerlaufklappern Kräfte (33) auf die Zahnräder (11, 12) aus. Dämpfungsglieder (30) sind derart zwischen den Zahnköpfen (22) der Zähne (15) des einen Zahnrades (12) und den Zahngründen (21) der Zähne (14) des anderen Zahnrades (11) angeordnet, daß die an einem ersten Zahnrad (11) angeordnete Dämpfungsglieder (30') beim Ineinandergreifen der Zähne (14, 15) in Anlage an ein zweites Zahnrad (12) gelangen.

## Beschreibung

Die Erfindung betrifft ein Zahnradgetriebe mit einem mindestens zwei Zahnräder umfassenden Radsatz und mit einem elastischen, zwischen den Zahnrädern wirkenden Dämpfungsglied, das beim Kämmen der Zahnräder zum Vermeiden von Leerlaufklappern und/oder Getrieberasseln Kräfte auf die Zahnräder ausübt.

Ein zahnradgetriebe der vorstehend genannten Art ist aus der US-PS 3 548 673 bekannt.

Bei Zahnradgetrieben, insbesondere bei Schaltgetrieben, besteht das bisher ungelöste Problem des Leerlaufklapperns und Getrieberasselns.

Bei der Fertigung der Getriebeelemente, insbesondere der Verzahnungen, treten immer bestimmte Toleranzen auf. Diese Toleranzen sind auch aus Funktionsgründen erforderlich, weil immer ein bestimmtes Flankenspiel zwischen den Zähnen der miteinander kämmenden Verzahnungen vorhanden sein muß. Vom Motor werden Torsionsschwingungen über die Kupplung ins Getriebe eingeleitet. Die Torsionsschwingungen haben ihre Ursache in den Drehungleichförmigkeiten der üblicherweise verwendeten Verbrennungsmotoren. Die in das Getriebe eingeleiteten Torsionsschwingungen führen wiederum zu Torsionsschwingungen der miteinander kämmenden und sich nicht im Kraftfluß befindlichen Zahnradpaare. Bei modernen Getrieben ist die Reibung in den Lagerstellen der Wellen und Losräder minimiert, um möglichst geringe Verluste zu erhalten. Aus diesem Grunde werden die Torsionsschwingungen fast ungedämpft in die Radsatzteile geleitet. Dies führt zu einem Klapper- bzw. Rasselgeräusch, das für Schaltgetriebe typisch ist. Das Geräusch tritt an den nicht im Kraftfluß befindlichen Zahnradpaaren auf, wenn die Zahnflanken der miteinander in Eingriff stehenden Zähne abheben, auf der Gegenseite anschlagen und wieder aufeinandertreffen.

Es sind bereits zahlreiche Maßnahmen vorgeschlagen worden, um Leerlaufklappern und Getrieberasseln in Zahnradgetrieben zu vermindern.

Aus der eingangs genannten US-PS 3 548 673 ist es bekannt, den üblicherweise zwei Zahnrädern eines Radsatzes jeweils eine Reibscheibe zuzuordnen, die axial neben dem Zahnrad angeordnet ist. Die Reibscheiben der beiden miteinander kämmenden Zahnräder des Radsatzes stehen dabei miteinander in reibschlüssiger Verbindung. Auf diese Weise kann ein Getrieberasseln verhindert oder zumindest stark reduziert werden, weil Torsionsschwingungen über die Reibscheiben gedämpft oder praktisch vollkommen unterdrückt werden, da die Reibscheiben parallel zu den Zähnen der Zahnräder in Eingriff miteinander stehen.

Derartige zusätzliche Reibscheiben erfordern jedoch einen zusätzlichen Bauraum, was die axiale Baulänge der Getriebe deutlich erhöht. Dies ist jedoch im modernen Getriebebau sehr unerwünscht, weil man neben geringem Gewicht auch geringe Abmessungen erreichen möchte.

Der Erfindung liegt daher die Aufgabe zugrunde, ein Zahnradgetriebe der eingangs genannten Art dahingehend weiterzubilden, daß eine Verminderung des Getrieberasselns erreicht wird, ohne die Baugröße des Getriebes zu erhöhen und ohne wesentliche zusätzliche Elemente und damit Kosten einsetzen zu müssen.

Diese Aufgabe wird erfindungsgemäß dadurch gelöst, daß Dämpfungsglieder derart zwischen den Zahnköpfen der Zähne des einen Zahnrades und den Zahngründen der Zähne des anderen Zahnrades angeordnet sind, daß die an einem ersten Zahnrad angeordneten Dämpfungsglieder beim Ineinandergreifen der Zähne in Anlage an ein zweites Zahnrad gelangen.

Die der Erfindung zugrundeliegende Aufgabe wird auf diese Weise vollkommen gelöst.

Mit den vorgeschlagenen Maßnahmen ist es nämlich möglich, Zahnradgetriebe herkömmlicher Bauart zunächst ohne jede Modifikation zu verwenden, d.h. ohne den Einsatz zusätzlicher Bauelemente oder eine Veränderung der Abmessungen. Es ist vielmehr lediglich erforderlich, an den Zähnen der Zahnräder die Dämpfungsglieder vorzusehen, was ohne weiteres möglich ist, da in den herkömmlichen Verzahnungen genügend Einbauraum zur Verfügung steht.

Bei bevorzugten Ausgestaltungen der Erfindung kann das zweite Zahnrad sich in radialer Richtung oder in tangentialer Richtung oder in beiden Richtungen an die Dämpfungsglieder anlegen. Bevorzugt ist dabei ferner, wenn die Dämpfungsglieder bei Anlage des zweiten Zahnrades zusammengedrückt werden. Je nach Richtung der Anlage werden die Dämpfungsglieder dann in radialer oder in tangentialer oder in beiden Richtungen zusammengedrückt.

Wenn die Dämpfungsglieder beim Abrollen der Zahnräder, d.h. beim Ineingriffkommen der Zähne zum Beispiel in radialer Richtung zusammengedrückt werden, entsteht ein Reibschluß zwischen den beiden beteiligten Rädern. Insbesondere entsteht dabei auch ein tangential wirkendes Dämpfungspolster zwischen dem Zahnkopf des einwälzenden Zahnes und den Zahnflanken der betreffenden Zahnlücke. Dieses tangential wirkende Dämpfungspolster dämpft das Anschlagen des einwälzenden Zahnkopfes. Es kann ferner als elastisches Halteelement das Abheben der Zahnflanke verhindern. Das Getrieberasseln und Leerlaufklappern wird auf diese Weise drastisch reduziert, und zwar in einen faktisch nicht mehr wahrnehmbaren Bereich hinein.

Bei einer bevorzugten Ausgestaltung des erfindungsgemäßen Zahnradgetriebes sind die Dämpfungsglieder in den Zahngründen des anderen Zahnrades befestigt.

Diese Maßnahme hat den Vorteil, daß die Dämpfungsglieder als punktförmige oder stabförmige Elemente in den Zahngründen angeordnet werden können, bspw. durch Einkleben, Einvulkanisieren oder durch formschlüssige Aufnahme. Damit sind die Dämpfungsglieder, solange sie nicht im Eingriff mit dem jeweils anderen Zahnrad stehen, durch die benachbarten Zähne äußerlich geschützt und können auf einfache Weise sicher gehalten werden.

Weiterhin ist bevorzugt, wenn die Dämpfungsglieder aus einem Elastomer bestehen.

Diese Maßnahme hat den Vorteil, daß auf Werkstoffe zurückgegriffen werden kann, die an sich als elastische und mechanisch dämpfende Werkstoffe bekannt sind und auch in anderen Bereichen eingesetzt werden, bspw. als Stoßdämpfer, Puffer, Dichtungen, Schläuche oder dergleichen.

Weitere Vorteile ergeben sich aus der Beschreibung und der beigefügten Zeichnung.

Es versteht sich, daß die vorstehend genannten und die nachstehend noch zu erläuternden Maßnahmen nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
Fig. 1 einen stark vergrößerten radialen Schnitt durch die miteinander kämmenden Zähne zweier Zahnräder eines Radsatzes zur Erläuterung der Erfindung;
Fig. 2 eine erste Variante der Darstellung gemäß Fig. 1; und
Fig. 3 eine zweite Variante der Darstellung gemäß Fig. 1.

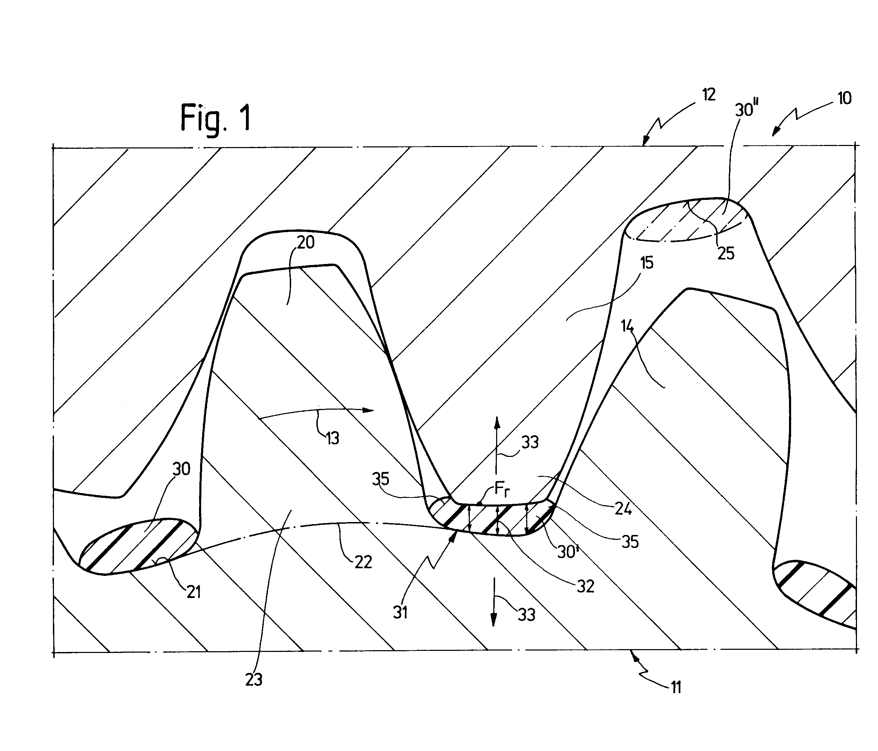

In Fig. 1 bezeichnet 10 einen Ausschnitt aus einem Radsatz, wie er typischerweise in einem stufengetriebe eines Kraftfahrzeuges verwendet wird. Das gezeigte Zahnradpaar befindet sich derzeit nicht im Kraftfluß und überträgt somit kein Drehmoment.

Der Radsatz 10 weist ein treibendes Zahnrad 11 sowie ein getriebenes Zahnrad 12 auf, wie mit einem Richtungspfeil 13 angedeutet. Der in Figur 1 links zu erkennende Zahn des treiben-den Zahnrades 11 liegt daher mit seiner rechten Flanke an einer Gegenflanke des in der Mitte oben zu erkennenden Zahnes des getriebenen Zahnrades 12 an.

Die Zähne des treibenden Zahnrades 11 sind insgesamt mit 14 und die Zähne des getriebenen Zahnrades 12 sind mit 15 bezeichnet.

Bei den Zähnen 14 des treibenden Zahnrades 11 sind 20 die Zahnköpfe und 21 die Zahngründe, die sich auf dem Fußkreis 22 des treibenden Zahnrades 11 zwischen den Zahnfüßen 23 befinden. In entsprechender Weise sind beim getriebenen Zahnrad 12 die Zahnköpfe mit 24 und die Zahngründe mit 25 bezeichnet.

Wie man aus Figur 1 deutlich erkennt, sind Dämpfungskörper 30 an den Zahngründen 21 des treibenden Zahnrades 11 angeordnet. Die Dämpfungskörper 30 bestehen vorzugsweise aus einem Kunststoff, insbesondere einem Elastomer. Allgemein gesprochen können als Dämpfungskörper 30 jedwede geeignete Dämpfungsmaterialien verwendet werden, d.h. Materialien, die in der Lage sind, bei der elastischen Verformung Verformungsarbeit in Wärme umzusetzen. Derartige Dämpfungsmaterialien sind im Maschinenbau allgemein bekannt und werden bei Stoßdämpfern, Puffer, Dichtungen, Schläuche und dergleichen eingesetzt. Auch der Einsatz von Polyamiden ist denkbar.

Bei dem in Figur 1 dargestellten Ausführungsbeispiel ist in jedem Zahngrund 21 ein Dämpfungskörper 30 angeordnet. Es versteht sich, daß die Dämpfungskörper 30 je nach Verzahnung auch in jedem zweiten oder jedem dritten Zahngrund 21 angeordnet sein können, falls die jeweilige Verzahnkonstruktion dies zuläßt. Die Dämpfungskörper können alternativ auch im Zahngrund beider Zahnräder des Zahnradpaares angeordnet oder auf den Zahnköpfen befestigt werden.

Bei Figur 1 wird ferner unterstellt, daß die Dämpfungskörper 30 in axialer Richtung über die axiale Breite des Zahngrundes 21 durchgehen, d.h. von einer Stirnfläche des treibenden Zahnrades 11 zur anderen Stirnfläche durchgehen. Die Dämpfungskörper 30 können aber auch in verminderter Breite ausgebildet sein, bspw. nur in der axialen Mitte der Zahngründe 21.

Die Dämpfungskörper 30 sind weiterhin ohne besondere Befestigungsvorrichtung dargestellt. Hierdurch soll angedeutet werden, daß die Dämpfungskörper 30 eingeklebt, einvulkanisiert oder sonstwie kraft- oder formschlüssig an den Zahngründen 21 befestigt sein können. Die Dämpfungskörper 30 können dabei als einzelne Körper oder auch als Stäbe an einem gemeinsamen Kranz angeordnet sein, der seitlich auf das treibende Zahnrad 11 aufgeschoben ist. Darüber hinaus können seitliche Stege, Nuten, Vertiefungen oder dergleichen an den Zahngründen 21 vorgesehen werden, um einen Formschluß zur verbesserten Befestigung der Dämpfungskörper 30 zu erreichen.

Die Dämpfungskörper 30 sind so dimensioniert, daß sie lediglich beim Abrollen der Zahnräder 11, 12 beaufschlagt werden, und zwar im Eingriffsbereich der Zähne 11, 12, während sie ansonsten unbeaufschlagt bleiben, wie Figur 1 deutlich zeigt.

Bei dem in Figur 1 dargestellten Ausführungsbeispiel ist immer nur ein einziger Dämpfungskörper 30 auf diese Weise beaufschlagt, wie an einer Position 31 dargestellt. Dort drückt der Zahnkopf 23 des in Figur 1 mittleren Zahnes 15 des getriebenen Zahnrades 12 von oben gegen den Dämpfungskörper 30, der sich nach am Zahngrund 21 des treibenden Zahnrades 11 abstützt.

Als Folge davon wird der Dämpfungskörper 30 zusammengedrückt, wie mit 30' in Figur 1 angedeutet. Infolge der Zusammendrückung des Dämpfungskörpers 30' entsteht ein Reibschluß zwischen Zahnkopf 24 und Dämpfungskörper 30, angedeutet durch eine Reibkraft Fᵣ.

Insbesondere entsteht ein tangential wirkendes Dämpfungspolster 35 zwischen dem Zahnkopf 24 des einwälzenden Rades 15 und den Zahnflanken der betreffenden Zahnlücke. Dieses tangential wirkende Dämpfungspolster 35 dämpft das Anschlagen des einwälzenden Zahnkopfes 24 oder verhindert als elastisches Halteelement das Abheben der Zahnflanken. Wenn daher Torsionsschwingungen auftreten, ist eine Relativbewegung der Zähne 14, 15 gegeneinander in Richtung des Pfeiles 13 bzw. in entgegengesetzter Richtung nicht möglich, weil eine solche Relativbewegung durch den geschilderten Reibschluß oder das elastische Halteelement verhindert bzw. vollständig gedämpft wird.

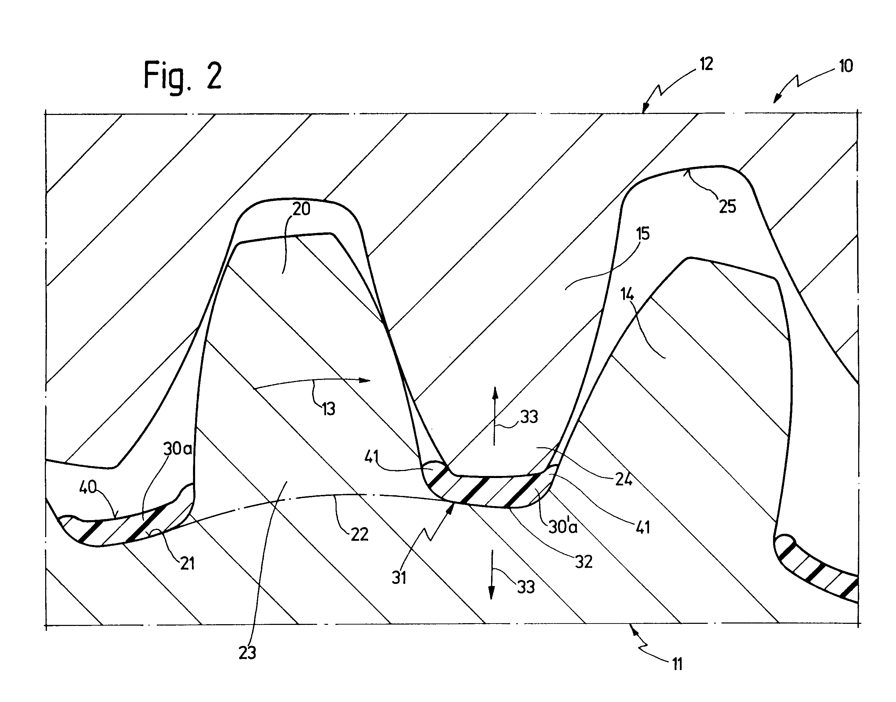

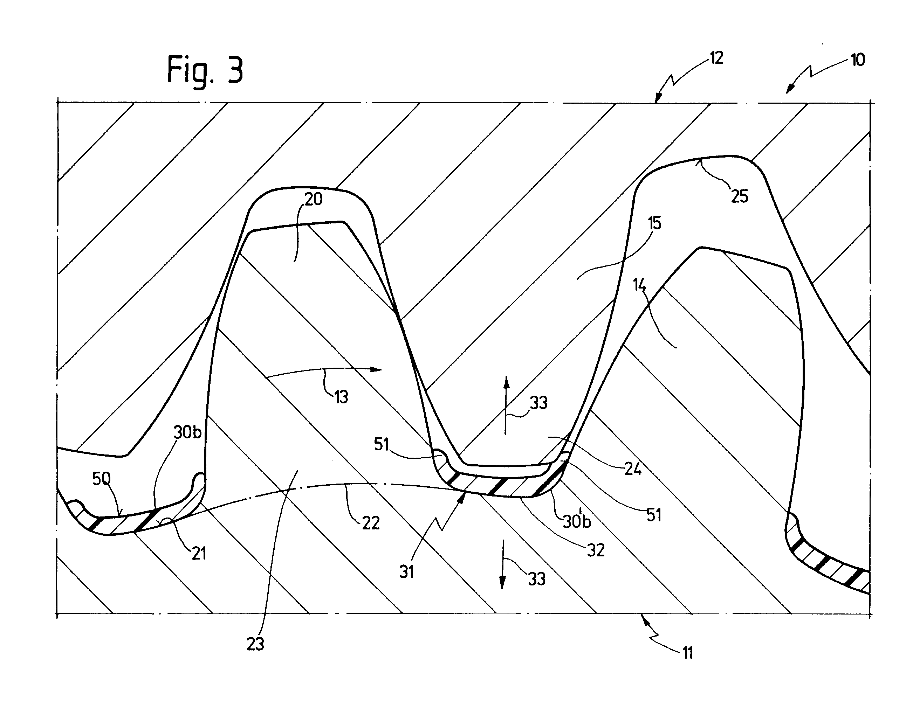

In Figur 1 ist schließlich mit 30" angedeutet, daß weitere Dämpfungskörper zusätzlich in den Zahngründen 25 der Zähne 15 des getriebenen Zahnrades 12 angeordnet sein können. Die Dämpfungskörper 30" können die Form der Dämpfungskörper 30 gemäß Figur 1 oder der Dämpfungskörper 30a, 30b gemäß den nachfolgend beschriebenen Figuren 2 und 3 haben. Bevorzugt ist eine Form gemäß Figur 2.

Beim Ausführungsbeispiel gemäß Figur 1 gelangen die Zahnköpfe 24 in radialer Richtung in Anlage an die Dämpfungskörper 30. Die Dämpfungskörper 30 werden daher in radialer Richtung deformiert, wie mit 30' in Figur 1 angedeutet. Die Dämpfungskörper 30 sind dabei nicht besonders vorgeformt.

Demgegenüber zeigt Figur 2 eine Variante der Erfindung, die sich von derjenigen gemäß Figur 1 nur dadurch unterscheidet, daß Dämpfungskörper 30a vorgesehen sind, die vorgeformt sind. Die Dämpfungskörper 30a weisen nämlich an ihrer Oberseite eine Vertiefung 40 auf. Die Vertiefung 40 ist in ihrer Formgebung an die Form der Zahnköpfe 24 angepaßt. Die Dämpfungskörper 30a werden dabei immer noch geringfügig radial zusammengedrückt, wie mit 30a' in Figur 2 angedeutet. Die tangentialen Dämpfungspolster sind in diesem Falle mit 41 bezeichnet und stärker ausgebildet, da sie bereits durch die Vorformung teilweise vorhanden sind.

Schließlich zeigt Figur 3 noch eine zweite Variante der Erfindung. Bei dieser zweiten Variante sind die Dämpfungskörper mit 30b bezeichnet. Die Dämpfungskörper 30b sind wiederum mit Vertiefungen 50 versehen. Die Vertiefungen 50 sind dabei jedoch so tief ausgebildet, daß die Zahnköpfe 24 in radialer Richtung nicht in Anlage an diese Vertiefungen kommen. Dies ist deutlich in der Mitte von Figur 2 zu erkennen. Die Zahnköpfe 24 legen sich vielmehr ausschließlich in tangentialer Richtung an die Dämpfungskörper 30b an. Die tangentialen Dämpfungspolster, die hier mit 51 bezeichnet sind, entstehen daher ausschließlich durch die Formgebung der Dämpfungskörper 30b.

In den Figuren 1 bis 3 ist somit veranschaulicht, daß die Dämpfungskörper 30 entweder nicht vorgeformt (Fig. 1) oder als Dämpfungskörper 30a vorgeformt und radial vorgespannt (Fig. 2) oder als Dämpfungskörper 30b vorgeformt und tangential vorgespannt (Fig. 3) sein können.

Die Funktion des Radsatzes 10 ist ansonsten völlig unbeeinträchtigt, weil die Drehmomentübertragung zwischen den Zahnrädern 11, 12 gleichwohl stattfinden kann.

Zu erwähnen ist noch, daß selbst bei einer Zerstörung eines Dämpfungskörpers 30 oder sogar aller Dämpfungskörper 30 die mechanischen Funktionen des Radsatzes 10 erhalten blieben, da die Drehmomentübertragung vom Vorhandensein der Dämpfungskörper 30 unabhängig ist.

## Patentansprüche

1. Zahnradgetriebe mit einem mindestens zwei Zahnräder (11, 12) umfassenden Radsatz (10) und mit einem elastischen, zwischen den Zahnrädern (11, 12) wirkenden Dämpfungsglied (30; 30a; 30b), das beim Kämmen der Zahnräder (11, 12) zum Vermeiden von Leerlaufklappern und/oder Getrieberasseln Kräfte (33; Fᵣ) auf die Zahnräder (11, 12) ausübt, dadurch gekennzeichnet, daß Dämpfungsglieder (30; 30a; 30b) derart zwischen den Zahnköpfen (23) der Zähne (15) des einen Zahnrades (12) und den Zahngründen (21) der Zähne (14) des anderen Zahnrades (11) angeordnet sind, daß die an einem ersten Zahnrad (11) angeordneten Dämpfungsglieder (30'; 30a'; 30b') beim Ineinandergreifen der Zähne (14, 15) in Anlage an ein zweites Zahnrad (12) gelangen.

2. Zahnradgetriebe nach Anspruch 1, dadurch gekennzeichnet, daß das zweite Zahnrad (12) sich in radialer Richtung an die Dämpfungsglieder (30; 30a) anlegt.

3. Zahnradgetriebe nach Anspruch 1 oder 2, dadurch gekennzeichnet, daß das zweite Zahnrad (12) sich in tangentialer Richtung an die Dämpfungsglieder (30a; 30b) anlegt.

4. Zahnradgetriebe nach einem oder mehreren der Ansprüche 1 bis 3, dadurch gekennzeichnet, daß die Dämpfungsglieder (30; 30a; 30b) bei Anlage des zweiten Zahnrades (12) zusammengedrückt werden.

5. Zahnradgetriebe nach einem oder mehreren der Ansprüche 1 bis 4, dadurch gekennzeichnet, daß die Dämpfungsglieder (30; 30a; 30b) in den Zahngründen (21) mindestens des ersten Zahnrades (11) befestigt sind.

6. Zahnradgetriebe nach einem oder mehreren der Ansprüche 1 bis 5, dadurch gekennzeichnet, daß die Dämpfungsglieder (30; 30a; 30b) aus einem Elastomer bestehen.
